# FASCICULE DE BREVET EUROPEEN

(11) **EP 1 683 667 B1**
(45) Date de publication et mention de la délivrance du brevet: **08.09.2010**
(21) Numéro de dépôt: 06100675.5
(22) Date de dépôt: 20.01.2006
(51) Int. Cl.: B60J 1/20

(54) **Dispositif d'occultation pour véhicule automobile comprenant un écran enroulable, et véhicule correspondant**
Abschattungsvorrichtung für ein Fahrzeug mit einer Rollobahn und entsprechendes Fahrzeug
Antiglare device for vehicles comprising a roller blind, and corresponding vehicle

(30) Priorité: 20.01.2005 FR 0500600
(43) Date de publication de la demande: 26.07.2006
(73) Titulaire: Advanced Comfort Systems France - ACS France, 79300 Bressuire (FR)
(72) Inventeur: Fourel, Pascal, F-35400 Saint Malo (FR); Devanne, Christophe, F-79300 Chambroutet (FR)
(74) Mandataire: Bioret, Ludovic

(56) Documents cités:
- EP-A- 1 188 591
- EP-A- 1 375 220

## Description

Le domaine de l'invention est celui de l'occultation d'une surface donnée dans un véhicule automobile, et notamment de surfaces vitrées correspondant par exemple au pare-brise de ce dernier. Plus précisément, l'invention concerne les dispositifs mettant en oeuvre un écran d'occultation selon le préambule de la revendication 1, mobile entre au moins une position repliée et au moins une position déployée, en particulier pour une surface dont le bord distal (éloigné des moyens d'enroulement) est plus large que le bord proximal (proche des moyens d'enroulement).

L'invention concerne aussi les véhicules correspondants, comprenant un tel dispositif. Le document EP 118 854 A révèle un véhicule équipé d'un tel dispositif.

Le problème de l'occultation des surfaces vitrées (ou d'une zone à dissimuler, tel qu'un coffre) est bien connu dans le domaine des véhicules automobiles. Il pose notamment des difficultés lorsque la surface concernée n'est pas rectangulaire.

Par exemple, les toits des véhicules automobiles sont parfois pourvus d'une baie et/ou d'une ouverture vitrée. Diverses solutions ont été proposées pour limiter le passage des rayons du soleil, notamment en utilisant des vitres teintées ou en rapportant un motif filtrant sur la vitre par sérigraphie.

Une tendance actuelle est de proposer des véhicules automobiles présentant de plus en plus de surfaces vitrées. On cherche donc à augmenter tant que faire se peut la surface des vitres latérales, des pare-brises et des lunettes arrière, et également des pavillons.

On développe également des pavillons intégralement, ou essentiellement, vitrés, et ne faisant qu'un, au moins visuellement, avec le pare-brise (absence d'un élément de carrosserie extérieur entre les deux).

Les objectifs de ces développements sont notamment d'offrir :
- une meilleure visibilité pour les occupants du véhicule ;
- une luminosité accrue à l'intérieur du véhicule ;
- une sensation d'espace élargi pour les occupants ;
- une amélioration esthétique générale du véhicule ;

Sur certains véhicules récents, il est ainsi prévu une surface vitrée quasi continue, englobant le pare-brise et le pavillon. Dans un tel mode de réalisation, le véhicule comprend un pare-brise et un pavillon vitré se prolongeant par l'intermédiaire d'un panneau vitré intermédiaire en direction du pare-brise pour rejoindre celui-ci de façon sensiblement coplanaire et affleurante. Le panneau intermédiaire est bien sûr optionnel, le pare-brise et le pavillon pouvant être configurés pour couvrir toute la surface.

Sur ce type de véhicule notamment, il est fréquent que le pare-brise s'étende à partir du pavillon (ou du panneau vitré intermédiaire) en s'élargissant. Cela peut aussi être le cas du pavillon vitré de la vitre arrière.

En d'autres termes, le haut du pare-brise (au voisinage du pavillon) peut dans certains cas présenter une largeur sensiblement inférieure à celle que présente le pare-brise à sa base (au voisinage du capot).

Ceci pose un problème en termes d'occultation de la surface vitrée du pare-brise.

En effet, avec les dispositifs d'occultation classiques, la toile est déployée à partir d'un tube d'enroulement dont la longueur correspond sensiblement à la largeur de la partie supérieure du pare-brise, le déploiement s'effectuant avec une largeur de toile constante.

Ceci à pour résultat que seulement une partie de la surface vitrée du pare-brise est occultée, les deux portions latérales s'étendant entre les bords de la toile et les montants du pare-brise (qui s'écartent l'un par rapport à l'autre) n'étant pas couvertes par la toile.

Le rayonnement du soleil peut donc passer par ces deux portions latérales, ce qui favorise le réchauffement et/ou l'éblouissement de l'habitacle malgré l'occultation procurée par la toile.

En outre, les pare-brise des véhicules actuels présentent le plus souvent une forme galbée à leur base et il est nécessaire de prévoir que la toile puisse correspondre à cette forme galbée, faute de quoi l'occultation n'est pas assurée complètement.

Bien entendu, il est possible de prévoir des toiles dont l'extrémité reliée à la barre de tirage est formé de façon à présenter, de façon prédéfinie et fixe, une forme galbée. Toutefois, une telle solution entraîne une nouvelle contrainte lorsque la toile est en position repliée, la portion correspondant à la forme du galbe ne pouvant être que difficilement enroulée, ce qui entraîne la formation de plis qui détériorent la toile et/ou augmentent l'encombrement.

L'invention a notamment pour objectif de pallier ces inconvénients de l'art antérieur.

Plus précisément, l'invention a pour objectif de proposer un dispositif d'occultation qui permet de réaliser l'occultation complète, ou à tout le moins optimisée, de surfaces de formes complexes telles que celles des pare-brise mentionnées en référence à l'art antérieur.

En ce sens, l'invention a notamment pour objectif de fournir un tel dispositif d'occultation qui permet de déployer la toile en faisant correspondre celle-ci à l'écartement croissant d'une surface vitrée.

L'invention a également pour objectif de fournir un tel dispositif d'occultation qui permet d'étendre une toile en fonction de la forme arrondie d'une surface vitrée telle que celle que peut présenter la base d'un pare-brise, ceci sans engendrer de contrainte lors de l'enroulement de la toile.

L'invention a aussi pour objectif de fournir un tel dispositif d'occultation qui soit simple de conception et facile à mettre en oeuvre.

Ces objectifs, ainsi que d'autres qui apparaîtront par la suite, sont atteints grâce à dispositif d'occultation pour véhicule automobile, comprenant un écran d'occultation mobile entre au moins une position repliée et au moins une position déployée, monté sur des moyens d'enroulement.

Selon l'invention, lesdits moyens d'enroulement présentent une section variable, le diamètre desdits moyens d'enroulement étant plus important dans une zone médiane de ces derniers.

La section variable des moyens d'enroulement ainsi constitués permet, dans une zone médiane de l'écran, de produire une longueur de déploiement, selon une direction sensiblement perpendiculaire aux moyens d'enroulement, supérieure à celle des bords de l'écran s'étendant au voisinage des extrémités latérales de ladite baie.

Aussi, comme cela va apparaître plus clairement par la suite, avec un dispositif selon l'invention, on peut notamment envisager deux configurations, prises isolément ou en combinaison :
- l'écran est divisé en deux portions de toile qui, lors du déploiement, prennent chacune progressivement une orientation formant un angle non nul avec une perpendiculaire à l'axe des moyens d'enroulement de telle sorte que leurs bords opposés s'écartent l'un de l'autre de façon à venir au plus près des montants de la surface vitrée (qui eux-mêmes s'écartent l'un de l'autre) ;
- la partie médiane de l'écran est déployée sur une longueur plus importante que sur les bord latéraux de l'écran, en vue de faire correspondre la forme de la surface d'occultation à la forme galbée de la base de la surface vitrée.

Dans les deux cas (ou dans la combinaison des deux cas), un dispositif d'occultation selon l'invention permet d'obtenir l'occultation complète d'une surface vitrée de forme complexe telle que celle des pare-brise mentionnée en référence à l'art antérieur.

Bien entendu, l'invention peut être appliquée à d'autres surfaces vitrées, telles que celles des hayons, des portières latérales ou des cache-bagages.

Selon une solution préférée, lesdits moyens d'enroulement présentent deux éléments tronconiques coaxiaux, dans ladite zone médiane.

On obtient ainsi un moyen simple et efficace pour modifier le déploiement de l'écran comparé aux solutions classiques, ceci en permettant un déroulement plus important en partie médiane de la surface vitrée par rapport aux bords extrêmes de l'écran.

Dans ce cas, lesdits éléments tronconiques sont avantageusement montés dans le prolongement l'un de l'autre, en s'étendant à partir d'une base commune correspondant à leurs plus grands diamètres respectifs.

On simplifie considérablement de cette façon le montage des éléments tronconiques, ceux-ci pouvant, selon un tel agencement, être réunis dans une pièce unique, voire être moulés sur ou avec les moyens d'enroulement.

Préférentiellement, lesdits moyens d'enroulement comprennent deux portions tubulaires d'extrémité et, dans ladite zone médiane, une portion de section présentant un diamètre supérieur à celui desdites portions d'extrémité.

Dans ce cas, ladite portion de section présentant un diamètre supérieur est formée ou rapportée sur un élément tubulaire unique.

Selon une première approche de l'invention, ledit écran d'occultation comprend deux toiles montées sur lesdits moyens d'enroulement de façon que ledit écran d'occultation, au moins dans une desdites positions déployées, s'étend sur une largeur supérieure à la longueur desdits moyens d'enroulement.

On peut ainsi permettre l'enroulement des toiles sur une longueur d'enroulement inférieur à la largeur occupée par l'extrémité libre des deux toiles l'une à côté de l'autre en position déployée.

Dans ce cas, lesdites toile sont préférentiellement montées de telle sorte qu'elles s'étendent sensiblement bord à bord en position déployée et se chevauchent lors du repliement et/ou en position repliée.

De cette façon, on obtient une occultation complète de la surface vitrée dans la mesure où les deux toiles forment une surface continue d'occultation qui s'évase pour concorder avec l'écartement progressif de la surface vitrée.

Selon un mode de réalisation préféré de cette première approche, le dispositif comprend une barre de tirage commune reliée à deux barres de tirage secondaires, associée chacune à l'une desdites toiles.

Ainsi, le déploiement/repliement des deux portions de toile est assuré simultanément.

Dans ce cas, ladite barre de tirage commune est reliée à chacune desdites barres de tirage secondaire par au moins une liaison coulissante.

Selon une deuxième approche de l'invention, ledit écran est formé d'une toile unique.

Dans ce cas, ladite toile présente préférentiellement une élasticité au moins dans une direction sensiblement parallèle auxdits moyens d'enroulement.

On peut de cette façon étirer la toile, du fait de son élasticité, de façon à adapter sa surface d'occultation à la surface vitrée, en particulier pour l'étendre en correspondance avec l'éventuelle forme galbée que présente la surface vitrée au voisinage de l'extrémité libre de la toile en position déployée.

Selon une solution avantageuse de cette deuxième approche, Selon l'une ou l'autre des approches qui viennent d'être citées, ledit écran d'occultation est entraîné par une barre de tirage unique et déformable.

La déformation de la barre commune peut de cette façon accompagner la déformation élastique de la toile.

L'invention concerne également un véhicule équipé d'un dispositif d'occultation tel que décrit précédemment.

D'autres caractéristiques et avantages de l'invention apparaîtront plus clairement à la lecture de la description suivante de deux modes de réalisation préférentiel de l'invention, donnés à titre d'exemples illustratifs et non limitatifs, et des dessins parmi lesquels :
- les figures 1 à 3 sont des vues schématiques d'un dispositif d'obturation selon un premier mode de réalisation de l'invention, respectivement en position repliée, en position intermédiaire et en position déployée ;
- les figures 4 et 5 sont des vues schématiques d'un dispositif d'obturation selon un deuxième mode de réalisation de l'invention, respectivement en position repliée et en position déployée.

Comme déjà indiqué, le principe général de l'invention repose notamment sur le fait que le dispositif d'obturation comprend un écran (comprenant une toile unique ou deux portions de toile) susceptible d'être déployée, selon une direction perpendiculaire à l'axe des moyens d'enroulement, avec une longueur en partie médiane du dispositif supérieure à la longueur, également selon une direction perpendiculaire à l'axe des moyens d'enroulement, des bords extrêmes des portions.

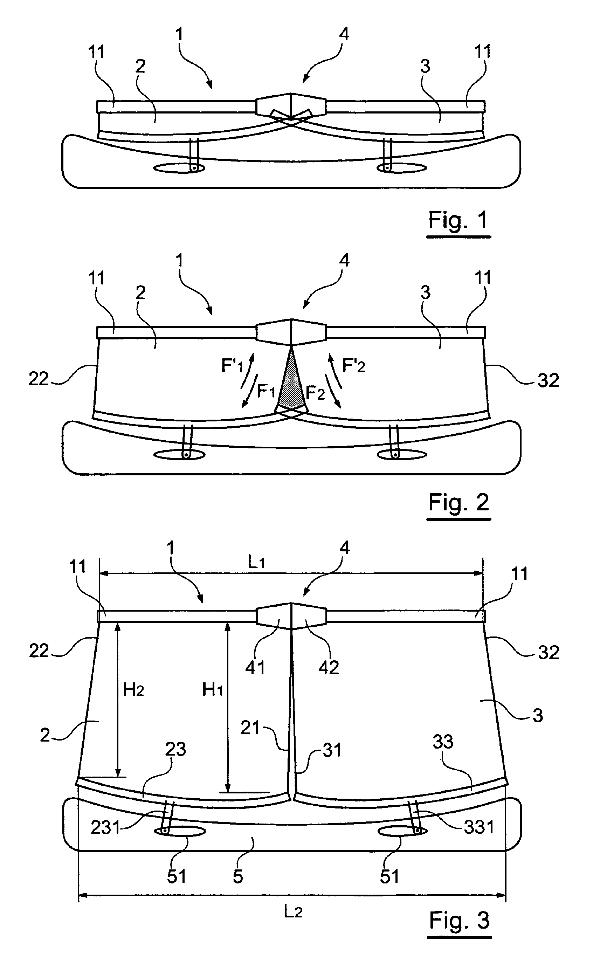

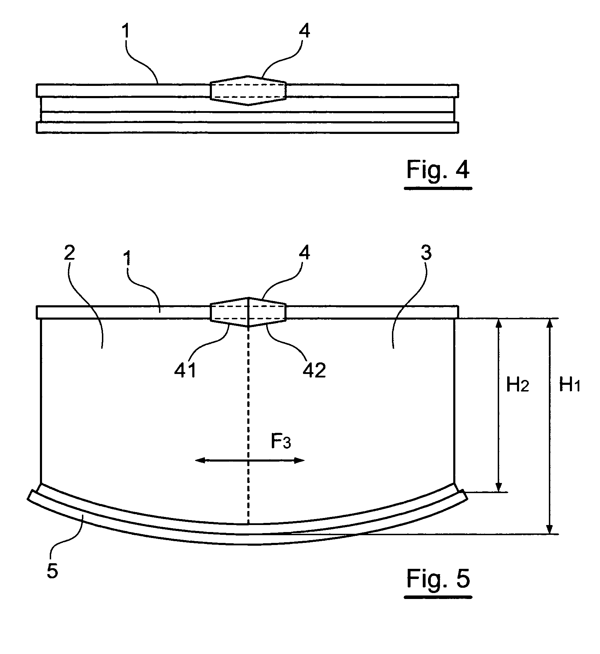

Ceci est illustré par les figures 3 et 5 qui sont chacune une vue d'un mode de réalisation d'un dispositif d'obturation selon l'invention.

On note que, pour la clarté de la description, il est mentionné par la suite que l'écran comprend deux portions. Comme cela va être rappelé, ces deux portions sont séparées dans le cas du mode de réalisation illustré par les figures 1 à 3, et forment une toile unique dans le cas du mode de réalisation illustré par les figures 4 et 5.

Tel que cela apparaît sur les figures 3 et 5, lorsqu'on considère les longueurs projetées sur une droite perpendiculaire à l'axe du tube d'enroulement 1, l'écran présente en partie médiane du dispositif une longueur de déploiement h₁ supérieur à la longueur h₂ en bordure du dispositif.

Ceci est obtenu à l'aide de moyens d'augmentation de la section 4 qui vont être explicités plus en détails pour chacun des deux modes de réalisation décrits par la suite.

Selon le mode de réalisation illustré par les figures 1 à 3, l'écran comprend deux portions de toile 2, 3 indépendantes l'une de l'autre.

De plus, les moyens d'augmentation de la section 4, constitués en l'occurrence de deux éléments tronconiques 41, 42, permettent de modifier la direction de déploiement des portions 2, 3 par rapport à une perpendiculaire à l'axe des moyens d'enroulement 1.

Ainsi, lors du déploiement des portions de toile 2, 3, ces dernières, du fait de la présence des éléments tronconiques 41, 42, s'orientent progressivement tel qu'indiqué par les flèches F₁ et F₂ (figure 2) pour passer d'une position dans laquelle elles se chevauchent (ceci étant symbolisé par la zone hachurée sur la figure 2) à une position de déploiement complet dans laquelle leurs bords voisins 21, 31 s'étendent bord à bord (ou se chevauchent encore, mais plus légèrement).

Bien entendu, lors du repliement des portions de toile 2, 3, le phénomène s'inverse. Les toiles s'orientent donc progressivement tel que symbolisé par les flèches F'₁ et F'₂.

Le résultat est le suivant : lors du déploiement, les bords extrêmes 22, 32 des portions 2, 3 s'écartent l'un de l'autre de telle sorte que la largeur 1₂ sur laquelle s'étendent ensemble les portions 2, 3 en position déployée est supérieure à la largeur 1₁ sur laquelle elles s'étendent en position repliée.

On note que les moyens d'augmentation de la section pourraient également être constitués par tout moyen permettant de former deux supports coaxiaux de diamètres différents montés de façon que, pour chaque portion de toile, les moyens d'enroulement présentent une augmentation de diamètre entre leurs extrémités et leur partie centrale. Ceci pourrait par exemple être obtenu par :
- une succession de roues disposées de proche en proche, mais écartées les unes des autres, de façon à former ensemble un support tronconique ;
- un tube à diamètres étagés ;
- une simple surépaisseur.

Selon le présent mode de réalisation, les deux éléments tronconiques 41, 42 sont montés en partie centrale des moyens d'enroulement 1, dans le prolongement l'un de l'autre en s'étendant à partir d'une base commune. Ils forment ainsi un double cône dont le diamètre décroît à partir de son milieu.

Tel que cela apparaît, les moyens d'enroulement 1 ainsi constitués présentent deux extrémités tubulaires 11 et, dans leur zone médiane, une portion de section présentant un diamètre supérieur à celui des extrémités 11.

Ceci est obtenu en rapportant les deux éléments tronconiques 41, 42 sur un tube s'étendant sur toute la longueur des moyens d'enroulement.

Par ailleurs, chaque portion de toile 2, 3 porte une barre de tirage secondaire (respectivement 23, 33), reliée à une barre de tirage commune 5.

Cette barre de tirage commune 5 est reliée aux barres de tirage secondaires 23, 33 par une liaison coulissante. Cette liaison est obtenue en ménageant deux lumières 51 dans la barre 5 dans lesquelles des pattes 231, 331 portées respectivement par les barres 23, 33 peuvent se déplacer au fur et à mesure des changements d'orientation des portions de toile 2, 3.

Les figures 4 et 5 illustrent un deuxième mode de réalisation de l'invention selon lequel les portions 2, 3 de toile sont solidaires l'une de l'autre et sont réalisés dans un matériau présentant une élasticité au moins dans le sens de la double flèche F₃.

Les moyens d'augmentation de la section 4 sont similaires à ceux décrits dans le premier mode de réalisation, et sont donc constitués par un double cône monté en partie centrale des moyens d'enroulement 1.

Ces moyens d'augmentation de la section tendent donc à produire le même effet que décrit précédemment sur les portions de toile 2, 3, c'est à dire qu'ils tendent à les écarter l'une de l'autre lors du déploiement et, inversement, à les rapprocher lors du repliement.

Or, les deux portions étant solidaires selon le présent mode de réalisation, leur chevauchement (comme dans le cas du premier mode de réalisation) entraînerait la formation d'un pli non souhaitable pour l'enroulement des deux portions sur les moyens d'enroulement.

L'élasticité des portions de toile selon la double flèche F₃ permet de pallier ce phénomène, en autorisant l'extension des portions de toile dans le sens de leur largeur lors du déploiement. Bien entendu, les portions retrouvent leur largeur d'origine au fur et à mesure du repliement.

Par ailleurs, une barre de tirage unique 5 s'étend le long de l'extrémité libre des deux portions de toile 2, 3.

Cette barre de tirage est, selon ce deuxième mode de réalisation, réalisée en un matériau élastiquement déformable de façon à pouvoir prendre une forme galbée (figure 5) en position déployée du dispositif, et une forme rectiligne (figure 4) en position repliée du dispositif.

## Revendications

1. Dispositif d'occultation pour véhicule automobile, comprenant un écran d'occultation (2,3) mobile entre au moins une position repliée et au moins une position déployée, monté sur des moyens d'enroulement (1),
**caractérisé en ce que** lesdits moyens d'enroulement (1) présentent une section variable, le diamètre desdits moyens d'enroulement (1) étant plus important dans une zone médiane de ces derniers.

2. Dispositif d'occultation selon la revendication 1, **caractérisé en ce que** lesdits moyens d'enroulement (1) présentent deux éléments tronconiques coaxiaux (41, 42) dans ladite zone médiane.

3. Dispositif d'occultation selon la revendication 2, **caractérisé en ce que** lesdits éléments tronconiques (41, 42) sont montés dans le prolongement l'un de l'autre, en s'étendant à partir d'une base commune correspondant à leurs plus grands diamètres respectifs.

4. Dispositif d'occultation selon l'une quelconque des revendications 1 à 3, **caractérisé en ce que** lesdits moyens d'enroulement (1) comprennent deux portions tubulaires d'extrémité (11) et, dans ladite zone médiane, une portion de section présentant un diamètre supérieur à celui desdites portions d'extrémité.

5. Dispositif d'occultation selon la revendication 4, **caractérisé en ce que** ladite portion de section présentant un diamètre supérieur est formée ou rapportée sur un élément tubulaire unique.

6. Dispositif d'obturation selon l'une quelconque des revendications 1 à 5, **caractérisé en ce que** ledit écran d'occultation comprend deux toiles (2, 3) montées sur lesdits moyens d'enroulement (1) de façon que ledit écran d'occultation, au moins dans une desdites positions déployées, s'étend sur une largeur supérieure à la longueur desdits moyens d'enroulement (1).

7. Dispositif d'obturation selon la revendication 6, **caractérisé en ce que** lesdites toiles (2, 3) sont montées de telle sorte qu'elles s'étendent sensiblement bord à bord en position déployée et se chevauchent lors du repliement et/ou en position repliée.

8. Dispositif d'obturation selon l'une des revendications 6 et 7, **caractérisé en ce qu'**il comprend une barre de tirage (5) commune reliée à deux barres de tirage secondaires (23, 33), associée chacune à l'une desdites toiles (2, 3).

9. Dispositif d'obturation selon la revendication 8, **caractérisé en ce que** ladite barre de tirage commune (5) est reliée à chacune desdites barres de tirage secondaires (23, 33) par au moins une liaison coulissante.

10. Dispositif d'obturation selon l'une quelconque des revendications 1 à 5, **caractérisé en ce que** ledit écran est formé d'une toile unique.

11. Dispositif d'occultation selon la revendication 10, **caractérisé en ce que** ladite toile présente une élasticité au moins dans une direction sensiblement parallèle auxdits moyens d'enroulement (1).

12. Dispositif d'occultation selon l'une quelconque des revendications 10 et 11, **caractérisé en ce que** ledit écran d'occultation est entraîné par une barre de tirage unique et déformable.

13. Véhicule automobile comprenant au moins un dispositif d'occultation comprenant un écran d'occultation mobile entre au moins une position repliée et au moins une position déployée, monté sur des moyens d'enroulement (1), **caractérisé en ce que** lesdits moyens d'enroulement (1) présentent une section variable, le diamètre desdits moyens d'enroulement (1) étant plus important dans une zone médiane de ces derniers.

## Claims

1. Screening device for a motor vehicle, comprising a covering screen (2, 3) which can be moved between at least a folded position and at least a deployed position and which is mounted on rolling means (1),
**characterised in that** the rolling means (1) have a variable cross-section, the diameter of the rolling means (1) being greater in a central zone thereof.

2. Screening device according to claim 1, **characterised in that** the rolling means (1) have two coaxial frustoconical elements (41, 42) in the central zone.

3. Screening device according to claim 2, **characterised in that** the frustoconical elements (41, 42) are mounted as an extension of each other, extending from a common base which corresponds to their largest respective diameters.

4. Screening device according to any one of claims 1 to 3, **characterised in that** the rolling means (1) comprise two tubular end portions (11) and, in the central zone, a cross-section portion which has a diameter greater than that of the end portions.

5. Screening device according to claim 4, **characterised in that** the cross-section portion having a larger diameter is formed or fitted on a single tubular element.

6. Screening device according to any one of claims 1 to 5, **characterised in that** the covering screen comprises two webs (2, 3) which are mounted on the rolling means (1) so that the covering screen, at least in one of the deployed positions, extends over a width greater than the length of the rolling means (1).

7. Screening device according to claim 6, **characterised in that** the webs (2, 3) are mounted so that they extend substantially edge-to-edge in a deployed position and overlap during folding, and/or when in the folded position.

8. Screening device according to either claim 6 or 7, **characterised in that** it comprises a common pulling bar (5) connected to two secondary pulling bars (23, 33) which are each associated with one of the webs (2, 3).

9. Screening device according to claim 8, **characterised in that** the common pulling bar (5) is connected to each of the secondary pulling bars (23, 33) by at least one sliding connection.

10. Screening device according to any one of claims 1 to 5, **characterised in that** the screen is formed by a single web.

11. Screening device according to claim 10, **characterised in that** the web has a resilience at least in a direction substantially parallel with the rolling means (1).

12. Screening device according to either claim 10 or claim 11, **characterised in that** the covering screen is moved by a single deformable pulling bar.

13. Motor vehicle comprising at least one screening device comprising a covering screen which can be moved between at least a folded position and at least a deployed position, and which is mounted on rolling means (1), **characterised in that** the rolling means (1) have a variable cross-section, the diameter of the rolling means (1) being greater in a central zone thereof.

## Patentansprüche

1. Verdunkelungsvorrichtung für ein Kraftfahrzeug, die eine Verdunkelungsabschirmung (2, 3) aufweist, die zwischen mindestens einer aufgerollten Position und mindestens einer ausgebreiteten Position beweglich ist, die auf Aufrollmittel (1) montiert ist,
**dadurch gekennzeichnet, dass** die Aufrollmittel (1) einen variablen Querschnitt aufweisen, wobei der Durchmesser der Aufrollmittel (1) in einem Mittenbereich dieser Letzteren größer ist.

2. Verdunkelungsvorrichtung nach Anspruch 1, **dadurch gekennzeichnet, dass** die Aufrollmittel (1) kegelstumpfförmige koaxiale Elemente (41, 42) in dem Mittenbereich aufweisen.

3. Verdunkelungsvorrichtung nach Anspruch 2, **dadurch gekennzeichnet, dass** die kegelstumpfförmigen Elemente (41, 42) zueinander in ihrer Verlängerung montiert sind und sich ausgehend von einer gemeinsamen Basis, die ihren jeweiligen größten Durchmessern entspricht, erstrecken.

4. Verdunkelungsvorrichtung nach einem der Ansprüche 1 bis 3, **dadurch gekennzeichnet, dass** die Aufrollmittel (1) zwei röhrenförmige Endabschnitte (11) aufweisen und in dem Mittenbereich einen Abschnitt mit einem Querschnitt aufweist, der einen Durchmesser aufweist, der größer ist als der der Endabschnitte.

5. Verdunkelungsvorrichtung nach Anspruch 4, **dadurch gekennzeichnet, dass** der Querschnittabschnitt, der einen größeren Durchmesser aufweist, auf einem einzigen röhrenförmigen Element ausgebildet oder an diesem angebaut ist.

6. Verdunkelungsvorrichtung nach einem der Ansprüche 1 bis 5, **dadurch gekennzeichnet, dass** die Verdunkelungsabschirmung zwei Tücher (2, 3) aufweist, die auf die Aufrollmittel (1) derart montiert sind, dass sich die Verdunkelungsabschirmung mindestens in einer der ausgebreiteten Positionen auf einer Breite erstreckt, die größer ist als die Länge der Aufrollmittel (1).

7. Verdunkelungsvorrichtung nach Anspruch 6, **dadurch gekennzeichnet, dass** die Tücher (2, 3) derart montiert sind, dass sie sich in der ausgebreiteten Position im Wesentlichen von einem Rand zum anderen erstrecken und sich beim Aufrollen und/oder in aufgerollter Position überlappen.

8. Verdunkelungsvorrichtung nach einem der Ansprüche 6 und 7, **dadurch gekennzeichnet, dass** sie eine gemeinsame Zugstange (5) aufweist, die mit zwei Nebenzugstangen (23, 33) verbunden ist, die jeweils einem der Tücher (2, 3) zugeordnet sind.

9. Verdunkelungsvorrichtung nach Anspruch 8, **dadurch gekennzeichnet, dass** die gemeinsame Zugstange (5) mit jeder der Nebenzugstangen (23, 33) durch mindestens eine Gleitverbindung verbunden ist.

10. Verdunkelungsvorrichtung nach einem der Ansprüche 1 bis 5, **dadurch gekennzeichnet, dass** die Abschirmung aus einem einzigen Tuch besteht.

11. Verdunkelungsvorrichtung nach Anspruch 10, **dadurch gekennzeichnet, dass** das Tuch eine Elastizität mindestens in eine Richtung im Wesentlichen parallel zu den Aufrollmitteln (1) aufweist.

12. Verdunkelungsvorrichtung nach einem der Ansprüche 10 und 11, **dadurch gekennzeichnet, dass** die Verdunkelungsabschirmung von einer einzigen und verformbaren Zugstange angetrieben wird.

13. Kraftfahrzeug, das mindestens eine Verdunkelungsvorrichtung aufweist, die eine Verdunkelungsabschirmung aufweist, die mindestens zwischen einer aufgerollten Position und mindestens einer ausgebreiteten Position beweglich ist, die auf Aufrollmittel (1) montiert ist,
**dadurch gekennzeichnet, dass** die Aufrollmittel (1) einen variablen Querschnitt aufweisen, wobei der Durchmesser der Aufrollmittel (1) in einem Mittenbereich dieser Letzteren größer ist.
